# EUROPÄISCHE PATENTANMELDUNG

(11) **EP 0 881 736 A2**
(43) Veröffentlichungstag der Anmeldung: **02.12.1998**
(21) Anmeldenummer: 98109131.7
(22) Anmeldetag: 18.05.1998
(51) Int. Cl.: H02J 1/10

(54) **Schaltunganordnung einer Stromversorgungseinheit**

(30) Priorität: 27.05.1997 DE 19722128
(71) Anmelder: Siemens Nixdorf Informationssysteme AG, 33106 Paderborn (DE)
(72) Erfinder: Busch, Peter, 86179 Augsburg (DE)
(74) Vertreter: Epping, Wilhelm, Dr.-Ing.

(57) **Zusammenfassung**

Bei Stromversorgungssystemen, die aus lauter gleichen, parallel geschalteten Stromversorgungseinheiten (SA; SB) aufgebaut sind, die wiederum jeweils eine Regelung einer Ausgangsspannung dadurch bewerkstelligen, dass mittels eines ersten Spannungsreglers (SPR1A; SPR1B) und eines Mittelwertbildners (R1A; R1B) auf einer für alle an dem Stromversorgungssystem beteiligten Stromversorgungseinheiten gemeinsamen Parallelsteuerbusleitung (PSBL) eine elektrische Führungsgröße zur Steuerung eines die Ausgangsspannung erzeugenden Leistungsteils (LSTA; LSTB) erzeugt wird, wird in einer jeden Stromversorgungseinheit (SA; SB) ein zweiter Spannungsregler (SPR2A; SPR2B) vor dem Leistungsteil (LSTA; LSTB) vorgesehen, dem die genannte elektrische Führungsgröße in Verbindung mit einem, mit einer Sollspannung (UrefA; UrefB) beaufschlagten Spannungsteiler (R2A, R3A; R2B, R3B) zugeführt wird und der in Abhängigkeit von der auf die angegebene Weise zugeführten elektrischen Führungsgröße seinerseits eine elektrische Führungsgröße für die Steuerung des Leistungsteils erzeugt. Der erzielte Vorteil ist, dass ein durch die erstgenannte elektrische Führungsgröße gegebener umfassenderer Regelbereich auf einen eingeschränkteren Fensterbereich begrenzt wird, und zwar in der Weise, dass das Leistungsteil (LSTA; LSTB) auch bei Extremwerten der erstgenannten elektrischen Führungsgröße stets eine Ausgangsspannung erzeugt, die in einem spezifizierten Bereich eines von dem Stromversorgungssystem zu betreibenden elektrischen Geräts liegt.

## Beschreibung

Die Erfindung betrifft eine Schaltungsanordnung einer Stromversorgungseinheit gemäß dem Oberbegriff des Anspruchs 1.

Computeranlagen oder Personalcomputer mit hoher Datenverarbeitungsleistung erfordern mehr und mehr Stromversorgungssysteme mit hohen Leistungen. Zur Anwendung kommen Stromversorgungssysteme, die mit Stromversorgungseinheiten aufgebaut sind, die parallel zusammenschaltbar sind, um so einerseits nur einen Typ von Stromversorgungseinheit zu haben, andererseits aber trotzdem jeweils gemäß den Anforderungen den Strombedarf decken zu können. Es reicht aber nicht mehr aus, nur den Strombedarf zu decken. Es muss auch sichergestellt werden, dass eine gleichmäßige Aufteilung der Stromanteile, die die Stromversorgungseinheiten jeweils zu einem Gesamtstrom liefern, gegeben ist. Dadurch wird eine gleichmäßige Belastung und damit eine möglichst lange Lebensdauer der Stromversorgungseinheiten erzielt. Weiter wird aber auch eine Redundanz in dem Stromversorgungssystem verlangt, so dass, wenn doch einmal eine Stromversorgungseinheit ausfällt, das Stromversorgungssystem weiterhin ohne Ausfall oder Einbruch der Systemspannungen die Computeranlage oder den Personalcomputer betreibt.

Aus EP 0 432 754 B1 ist eine Schaltungsanordnung einer Stromversorgungseinheit bekannt, die den obigen Kriterien entspricht. Sie ist parallel zu einem redundanten Stromversorgungssystem zusammenschaltbar mit einer auf die jeweiligen Stromversorgungseinheiten gleichmäßigen Aufteilung der Ausgangsstromanteile. In dieser Stromversorgungseinheit stellt eine als Regelstrecke bezeichnete Komponente ein Leistungsteil dar, das auf einer Ausgangsleitung eine Ausgangsspannung liefert. Zum Zweck der Bildung des Stromversorgungssystems ist die Ausgangsleitung mit einer gemeinsamen Verbindungsleitung für eine gemeinsame Ausgangsspannung verbunden, die dadurch erzeugt wird, dass an die gemeinsame Verbindungsleitung jeweils auch die Ausgangsleitungen der jeweiligen anderen Stromversorgungseinheiten des Stromversorgungssystems angeschlossen sind.

Für die richtige Regelung der Ausgangsspannung der Stromversorgungseinheit steht die Regelstrecke mit ersten Mitteln gebildet aus einem Spannungsregler in Verbindung, mit dem eine Spannungsabweichung zwischen der gemeinsamen Ausgangsspannung und einer Sollausgangsspannung in Form einer Referenzspannung erfasst wird. Ein Mittelwertbildner in Form eines Widerstandes erzeugt als ein zweites Mittel aus der vom Spannungsregler erfassten Spannungsabweichung eine ein Maß für einen gemittelten Sollstrom darstellende elektrische Führungsgröße auf einer für alle an einem Stromversorgungs-system beteiligten Stromversorgungseinheiten gemeinsamen Parallelsteuerbusleitung. Schließlich dienen dritte Mittel in Form eines Stromreglers dazu, einen auf der Ausgangsleitung fließenden Iststrom auf den durch die zweiten Mittel in Form der elektrischen Führungsgröße dargestellten Sollstrom einzu-stellen. Dazu steuert der Stromregler direkt die Regelstrecke in einer entsprechenden Weise, beispielsweise durch eine Tastverhältnissteuerung von in dem Leistungsteil enthaltenen Schalttransistoren.

Nachteilig bei dieser Stromversorgungseinheit ist, dass bei einem defekten Spannungsregler von einer der an einem Stromversorgungssystem beteiligten Stromversorgungseinheiten die elektrische Führungsgröße auf der gemeinsamen Parallelsteuerbusleitung bei hinzukommenden ungünstigen Lastbedingungen nicht mehr die für einen regulären Betrieb notwendige Spannungshöhe erreichen kann. Dadurch wird die gemeinsame Ausgangsspannung aus einem spezifizierten Ausgangsspannungsbereich gezogen. Das hat zur Folge, dass ein von dem Stromversorgungssystem zu betreibendes elektrisches Gerät nicht mehr funktionstüchtig gehalten werden kann. Es fällt aus. Der Ausfall ist Folge des Umstandes, dass alle nicht defekten Stromversorgungseinheiten ihre zu liefernden Stromanteile anhand der falsch eingestellten elektrischen Führungsgröße auf der gemeinsamen Parallelsteuerbusleitung einstellen. Es wird die gemeinsame Ausgangsspannung des Stromversorgungssystems zurückgeregelt, um den durch den aktuellen Stand der elektrischen Führungsgröße vorgegebenen verminderten Strom einzuregeln. Das von dem Stromversorgungssystem zu betreibende Gerät fällt aus, obwohl die nicht defekten Stromversorgungseinheiten wegen der vorhandenen Redundanz in dem Stromversorgungssystem prinzipiell in der Lage wären, die defekte Stromversorgungseinheit zu ersetzen.

Aufgabe der vorliegenden Erfindung ist es daher, eine Stromversorgungseinheit der eingangs genannten Art derart zu verbessern, dass trotz eines vorhandenen, auf die gemeinsame Parallelsteuerbusleitung wirkenden defekten Spannungsreglers einer Stromversorgungseinheit eines mit solchen Stromversorgungseinheiten durch Parallelschaltung aufgebauten Stromversorgungssystems ein von dem Stromversorgungssystem zu betreibendes Gerät funktionstüchtig gehalten wird.

Gelöst wird diese Aufgabe durch die Merkmale, die im kennzeichnenden Teil des Anspruchs 1 angegeben sind.

Danach ist eine Stromversorgungseinheit zwischen den dritten Mitteln und dem Leistungsteil mit vierten Mitteln ausgestattet, die einen umfassenderen Regelbereich der dritten Mittel auf einen eingeschränkten Fensterbereich beschränken derart, dass das Leistungsteil im Rahmen seiner Regelung stets eine Ausgangsspannung liefert, mit der ein angeschlossenes zu betreibendes elektrisches Gerät funktionstüchtig ist.

Vorteilhafte Ausgestaltungen der Erfindung sind Gegenstand von Unteransprüchen.

Danach gehören zu den ersten Mitteln ein erster Spannungsregler, zu den zweiten Mitteln ein erster Widerstand, zu den dritten Mitteln ein Stromregler und zu den vierten Mitteln ein zweiter mit verschiedenen Beschaltungswiderständen kombinierter Spannungsregler, der derart mit den vorhandenen Elementen, insbesondere mit den verschiedenen Widerständen, zusammengeschaltet ist, dass er für die Steuerung des Leistungsteils ein Ausgangsspannungsregelfenster festlegt in einem solchen Bereich, dass das Leistungsteil stets eine solche Ausgangsspannung liefert, dass ein zu betreibendes Gerät funktionstüchtig ist. Der Stromregler, der für die Steuerung des Leistungsteils bisher zuständig war, bestimmt danach nicht mehr direkt die Steuerung des Leistungsteils und damit die gemeinsame Ausgangsspannung der Stromversorgungseinheit, sondern nur noch eine nicht mehr auf Null Volt ziehbare Sollspannung, dessen Vergleich mit der Istspannung am Ausgang der Stromversorgungseinheit zu einer Einstellung der Regelung des Leistungsteils über den zweiten Spannungsregler führt. Damit wird der oben angestrebte Effekt, nämlich dass das Leistungsteil im Rahmen seiner Regelung stets eine Ausgangsspannung liefert, mit der ein angeschlossenes Gerät funktionstüchtig ist, erreicht.

Nachfolgend wird ein Ausführungsbeispiel der Erfindung anhand einer Zeichnung näher erläutert. Darin zeigen
- Figur 1: eine Prinzipschaltung einer Stromversorgungseinheit gemäß dem Stand der Technik, und
- Figur 2: eine Prinzipschaltung einer Stromversorgungseinheit gemäß der Erfindung.

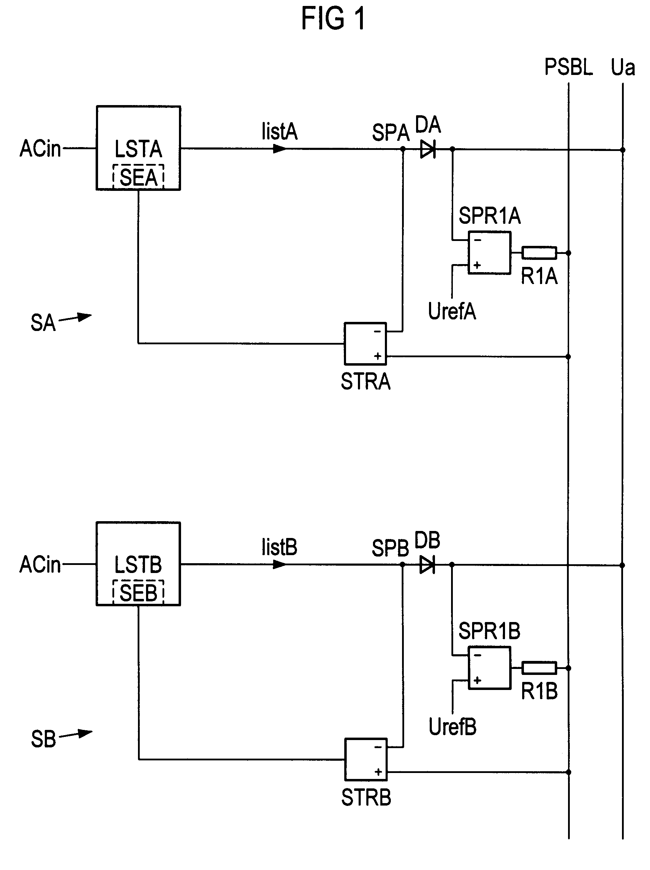

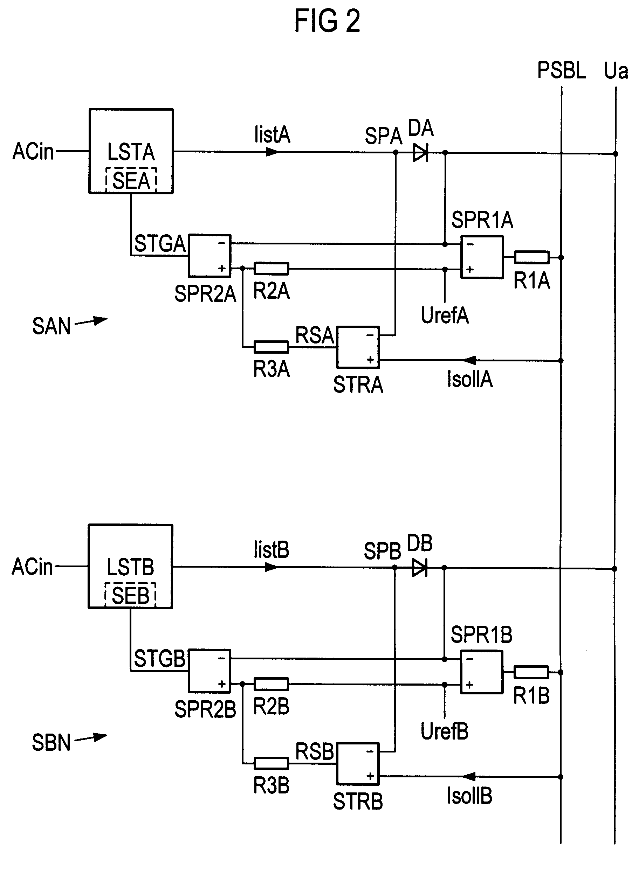

In der Figur 1 ist ein Stromversorgungssystem mit zwei parallelgeschalteten, identischen Stromversorgungseinheiten SA und SB zu sehen. Die Anzahl der parallel geschalteten Stromversorgungseinheiten ist für die Beschreibung der Erfindung unerheblich, da sich die Erfindung auf die Stromversorgungseinheit an sich bezieht und die Zahl Zwei nur stellvertretend für eine mögliche größere Anzahl steht. Weiter beschränkt sich die nachfolgende Beschreibung auf die Beschreibung der in der Figur 1 an erster Stelle gezeichneten Stromversorgungseinheit SA, da die weiteren Stromversorgungseinheiten identisch sind. Soweit also Bezugszeichen mit dem Endbuchstaben A angegeben werden, gelten diese auch für die anderen Stromversorgungseinheiten mit der Maßgabe, dass der Endbuchstabe durch einen entsprechenden weiteren fortlaufenden Buchstaben ersetzt ist. Für die in der Figur 1 zum Beispiel an zweiter Stelle angegebenen Stromversorgungseinheit ist das beispielsweise der Buchstabe B. Ähnliches gilt im übrigen auch für die Figur 2 mit dem einzigen Unterschied, dass dort die Stromversorgungseinheiten mit den Bezugszeichen NSA und NSB bezeichnet sind. Zwischen den beiden Figuren 1 und 2 besteht noch die Beziehung, dass gleiche Komponenten mit den gleichen Bezugszeichen versehen sind.

Die in der Figur 1 an erster Stelle angegebene Stromversorgungseinheit SA weist ein Leistungsteil LSTA auf, das mit einer Eingangswechselspannung ACin versorgt wird. Das Leistungsteil LSTA ist an einem Ausgang mit einer Ausgangsleitung verbunden, die wiederum über eine gemeinsame Verbindungsleitung, auf der eine gemeinsame Ausgangsspannung Ua des Stromversorgungssystems abgegriffen werden kann, mit den Ausgangsleitungen der jeweils anderen, zum Stromversorgungs-System gehörenden Stromversorgungseinheiten, zum Beispiel der Stromversorgungseinheit SB, verbunden ist. Je nach vorherrschender Strombelastung auf der gemeinsamen Verbindungsleitung fließt auf der Ausgangsleitung, jetzt wieder zurück zur Betrachtung zu der Stromversorgungseinheit SA, ein Stromanteil, der als ein Iststrom IistA aufzufassen ist. Alle diese Istströme der noch vorhandenen Stromversorgungseinheiten tragen einen Anteil zum gesamten Laststrom auf der gemeinsamen Verbindungsleitung bei. Solange dieser Laststrom erzeugt werden kann, ist ein von dem Stromversorgungssystem zu betreibendes Gerät funktionstüchtig.

In der Ausgangsleitung ist eine Entkopplungsdiode DA eingebaut, die die Funktion hat, dass die Stromversorgungseinheit SA im laufenden Betrieb des Stromversorgungssystems dazugeschaltet oder abgekoppelt werden kann.

Das Leistungsteil LSTA weist einen Steuereingang SEA auf, über den zu Steuerungszwecken eine elektrische Führungsgröße zugeführt wird. Abhängig von der elektrischen Führungsgröße regelt das Leistungsteil LSTA auf der Ausgangsleitung den Iststrom IistA ein.

Im Detail erfolgt die Einregelung des Iststromes IistA dadurch, dass über einen ersten Spannungsregler SPR1A die gemeinsame Ausgangsspannung Ua auf der gemeinsamen Verbindungsleitung abgegriffen und mit einer Sollspannung, die durch eine Referenzspannung UrefA zur Verfügung gestellt wird, verglichen wird. Die gemeinsame Ausgangsspannung Ua ist dabei dem ersten Spannungsregler SPR1A am Minuseingang und die Referenzspannung UrefA am Pluseingang zugeführt. Als Ergebnis des Vergleichs wird eine Spannung erzeugt, die über einen Widerstand R1A auf eine gemeinsame Parallelsteuerbusleitung PSBL geführt wird. Es handelt sich deshalb um eine gemeinsame Parallelsteuerbusleitung, weil diese Leitung alle entsprechenden Punkte der anderen am Stromversorgungssystem beteiligten Stromversorgungseinheiten miteinander verbindet und parallel schaltet.

Der Widerstand R1A stellt für die Stromversorgungseinheit SA einen Mittelwertbildner dar, weil sich durch diesen Widerstand in Verbindung mit den jeweils entsprechenden Widerständen der anderen am Stromversorgungssystem beteiligten Stromversorgungseinheiten auf der gemeinsamen Parallelsteuerbusleitung PSBL eine Spannung als eine elektrische Führungsgröße einstellt, die ein Maß für einen gemittelten Sollstrom darstellt. Anhand des gemittelten Sollstromes stellen alle Stromversorgungseinheiten ihre Stromanteile an den zugehörigen Ausgangsleitungen ein, so dass letztlich alle Stromversorgungseinheiten bis auf bauteiltechnisch bedingte Toleranzunterschiede den gleichen Stromanteil liefern.

Ein Stromregler STRA greift über seinen Pluseingang diesen gemittelten Sollstrom ab und vergleicht diesen mit dem Iststrom IistA des Leistungsteils LSTA. Dazu ist der Stromregler STRA über einen Strommesspunkt SPA mit der Ausgangsleitung des Leistungsteils LSTA verbunden. In Abhängigkeit von dem Vergleich erzeugt dann der Stromregler STRA die elektrische Führungsgröße, die das Leistungsteil LSTA dahingehend steuern, dass auf der Ausgangsleitung ein Iststrom IistA fließt, der dem gemittelten Sollstrom auf der gemeinsamen Parallelsteuerbusleitung PSBL entspricht.

Weist nun bei dem Stromversorgungssystem gemäß der Figur 1 ein erster Spannungsregler, z.B. SPR1A der Stromversorgungseinheit SA, einen solchen Defekt auf, dass er die elektrische Führungsgröße auf der gemeinsamen Parallelsteuerbusleitung PSBL gegen Null zieht, werden die Leistungsteile der anderen Stromversorgungseinheiten, z.B. LSTB, ihre Istströme, z.B. Iststrom IistB, wegen des gemeinsamen gemittelten Sollstromes entsprechend herunter regeln. Der Laststrom auf der gemeinsamen Verbindungsleitung kann nicht mehr aufrechterhalten werden. Die gemeinsame Ausgangsspannung Ua auf der gemeinsamen Verbindungsleitung bricht zusammen. Das zu betreibende elektrische Gerät fällt aus.

Differenzierter ist der Fall zu betrachten, wenn der erste Spannungsregler z.B. SPR1A einen solchen Defekt hat, dass er die elektrische Führungsgröße auf der gemeinsamen Parallelsteuerbusleitung PSBL langsam gegen Null zieht. In dieser Phase wird ein Sollstrom, dargestellt durch die elektrische Führungsgröße auf der gemeinsamen Parallelsteuerbusleitung PSBL, gefordert, der dem tatsächlichen Laststrom auf der gemeinsamen Verbindungsleitung nicht entspricht. Die nicht defekten Spannungsregler z.B. SPR1B der anderen am Stromversorgungssystem beteiligten Stromversorgungseinheiten regeln daher zunächst nach oben, bis ihr Aussteuerbereich, der in der Regel begrenzt ist, ausgenützt ist. Bei zwei Stromversorgungseinneiten z.B. SA und SB können so beispielsweise nur 50% der maximalen Spannungsreglerausgangsspannung als maximale Führungsgröße erreicht werden. Dies könnte bei einem geforderten maximalen Laststrom auf der gemeinsamen Verbindungsleitung nicht ausreichen, so dass dann die gemeinsame Ausgangsspannung auf der gemeinsamen Verbindungsleitung wieder zusammenbrechen wird.

Um einen Ausfall in den oben genannten Fällen zu verhindern, zeigt Figur 2 ein Stromversorgungssystem mit zwei neuen Stromversorgungseinheiten NSA und NSB, wobei sich entsprechend dem zur Figur 1 Gesagtem die nachfolgende Beschreibung im wesentlichen wieder auf die Beschreibung der Stromversorgungseinheit NSA beschränkt. Bei der Stromversorgungseinheit NSA regelt der Stromregler STRA das Leistungsteil LSTA nicht mehr direkt, sondern über einen zweiten Spannungsregler SPR2A. Der zweite Spannungsregler SPR2A ist mit verschiedenen Widerständen R2A und R3A derart zwischen dem Stromregler STRA und dem Leistungsteil LSTA geschaltet, dass eine von dem zweiten Spannungsregler SPR2A zur Steuerung des Leistungsteils LSTA erzeugte elektrische Führungsgröße STGA gegenüber einem umfassenderen Regelbereich des Stromreglers STRA mit einer elektrischen Führungsgröße RSA auf einen Fensterbereich eingeschränkt ist.

Im einzelnen ist die neue Beschaltung solcher Art, dass ein Minuseingang des zweiten Spannungsreglers SPR2A mit der gemeinsamen Ausgangsspannung Ua beaufschlagt ist, dass der Pluseingang des zweiten Spannungsreglers SPR2A gleichzeitig mit den Widerständen R2A und R3A verbunden ist, von denen der erstgenannte Widerstand R2A mit der Referenzspannung UrefA beaufschlagt ist und der zweitgenannte Widerstand R3A mit dem Ausgang des Stromreglers STRA verbunden ist. Der Ausgang des zweiten Spannungsreglers SPR2A ist mit dem Steuereingang SEA des Leistungsteils LSTA verbunden.

Die Widerstände R2A und R3A bilden bezüglich der Referenzspannung UrefA einen Spannungsteiler, der in der Weise eingestellt ist, dass bei einer elektrischen Führungsgröße von Null auf der gemeinsamen Parallelsteuerbusleitung PSBL am Pluseingang des zweiten Spannungsreglers SPR2A noch eine solche Spannung vorherrscht, dass damit für das Leistungsteil LSTA noch eine solche Steuerspannung STGA erzeugt wird, dass das Leistungsteil LSTA noch eine Ausgangsspannung in einer solchen Höhe liefert, dass damit ein zu betreibendes elektrisches Gerät immer noch funktionstüchtig ist.

Wird die elektrische Führungsgröße auf der gemeinsamen Parallelsteuerbusleitung PSBL nach oben hin aus dem spezifizierten Bereich durch einen defekten ersten Spannungsregler SPR1A gezogen, dienen auch hier wieder die Widerstände R2A und R3A als Spannungsteiler, so dass sich die Auswirkungen ebenfalls nur eingeschränkt bemerkbar machen.

Insgesamt ergibt sich nur eine Ausgangsspannungsänderung innerhalb eines Toleranzfensters. Das Toleranzfenster muss größer sein als die zu erwartenden Toleranzen der Referenzspannungen, Ausgangsspannungsteiler und Regler. Wird dieses Toleranzfenster gleichzeitig kleiner als eine spezifizierte Ausgangsspannungstoleranz gewählt, wird auch bei einem ausfallenden 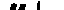 Spannungsregler 1" der spezifizierte Ausgangsspannungsbereich nicht verlassen.

## Patentansprüche

1. Schaltungsanordnung einer Stromversorgungseinheit, parallel zusammenschaltbar mit gleichartigen Stromversorgungseinheiten zu einem redundanten Stromversorgungssystem mit auf die jeweiligen Stromversorgungseinheiten gleichmäßig aufgeteilten Ausgangsstromanteilen, mit wenigstens einer zum Zweck der Bildung des Stromversorgungssystems mit einer zugehörigen gemeinsamen Verbindungsleitung für eine entsprechende gemeinsame Ausgangsspannung in Verbindung stehende Ausgangsleitung für eine mit einem Leistungsteil erzeugte Ausgangsspannung, zu deren Regelung erste Mittel zum Erfassen einer Spannungsabweichung gegenüber einer Sollausgangsspannung, zweite Mittel zum Erzeugen einer von der erfassten Spannungsabweichung beeinflussten, ein Maß für einen gemittelten Sollstrom darstellenden elektrischen Führungsgröße auf einer für die an einem Stromversorgungssystem beteiligten Stromversorgungseinheiten gemeinsamen Parallelsteuerbusleitung und dritte Mittel zum Einregeln eines auf der Ausgangsleitung fließenden Iststromes auf den gemittelten Sollstrom durch Steuern des Leistungsteils vorgesehen sind, **dadurch gekennzeichnet,** dass zwischen den dritten Mitteln und dem Leistungsteil (z.B. LSTA) vierte Mittel vorgesehen sind, die einen umfassenderen Regelbereich der dritten Mittel auf einen eingeschränkten Fensterbereich beschränken derart, dass das Leistungsteil (z.B. LSTA) im Rahmen seiner Regelung stets eine Ausgangsspannung liefert, die zu einer gemeinsamen Ausgangsspannung auf der gemeinsamen Verbindungsleitung führt, mit der ein an die gemeinsame Verbindungsleitung angeschlossenes Gerät funktionstüchtig ist.

2. Schaltungsanordnung nach Anspruch 1, **dadurch gekennzeichnet,** dass zu den ersten Mitteln ein erster Spannungsregler (z.B. SPR1A) mit einem Minus- und einem Pluseingang gehört, dessen Minuseingang mit der gemeinsamen Ausgangsspannung (Ua) und dessen Pluseingang mit einer ersten Referenzspannung (z.B. UrefA) als Maß für die Sollausgangsspannung beaufschlagt ist, dass zu den zweiten Mitteln ein erster Widerstand (z.B. R1A) gehört, der zwischen einem Ausgang des ersten Spannungsreglers (z.B. SPR1A) und der Parallelsteuerbusleitung (PSBL) angeordnet ist, dass zu den dritten Mitteln ein Stromregler (z.B. STRA) gehört, der mit einem Minuseingang zum Überwachen des Iststromes (z.B. IistA) mit der Ausgangsleitung des Leistungsteils (z.B. LSTA) und mit einem Pluseingang mit der Parallelsteuerbusleitung (PSBL) verbunden ist, und dass zu den vierten Mitteln ein zweiter Spannungsregler (z.B. SPR2A) gehört, der mit einem Minuseingang mit der Ausgangsspannung (Ua) beaufschlagt ist, der mit einem Pluseingang über einen zweiten Widerstand (z.B. R2A) mit dem Pluseingang des ersten Spannungsreglers (z.B. SPR1A) und über einen dritten Widerstand (z.B. R3A) mit einem Ausgang des Stromreglers (z.B. STRA) verbunden ist, und der mit einem Ausgang mit einem Steuereingang (z.B. SEA) des Leistungsteils (z.B. LSTA) verbunden ist.

3. Schaltungsanordnung nach Anspruch 2, **dadurch gekennzeichnet,** dass der zweite und dritte Widerstand (z.B. R2A und R3A) bezüglich der Referenzspannung (z.B. UrefA) und einer am Ausgang des Stromreglers (z.B. STRA) abgegebenen Regelspannung (z.B. RSA) innerhalb eines maximalen Regelbereichs zwischen 0 Volt und einem Spannungshöchstwert einen Spannungsteiler bilden derart, dass das Leistungsteil (z.B. LSTA) durch den zweiten Spannungsregler (z.B. SPR2A) mit einer Steuergröße (z.B. STGA) angesteuert ist derart, dass das Leistungsteil (z.B. LSTA) innerhalb des Fensterbereichs eine Ausgangsspannung liefert, die stets zu einer gemeinsamen Ausgangsspannung führt, mit der ein an die gemeinsame Verbindungsleitung angeschlossenes Gerät funktionstüchtig ist.
